# EUROPEAN PATENT APPLICATION

(11) **EP 4 661 143 A1**
(43) Date of publication of application: **10.12.2025**
(21) Application number: 24180283.4
(22) Date of filing: 05.06.2024
(51) Int. Cl.: H01M 10/0585, H01M 50/533, H01M 50/536, H01M 50/54

(54) **A BATTERY COMPRISING A STACK OF ELECTRODES WITH SUPERPOSED TABS**

(71) Applicant: Renata AG, 4452 Itingen (CH)
(72) Inventor: HAERING, Pascal, 4147 Aesch (CH); WU, Han, Pembroke Pines, 33029 (US); EL BARADAI, Oussama, 4057 Basel (CH); WALTHER, Simon, 3604 Thun (CH); BOLL, Martin, 3550 Langnau (CH); TURKES, Melike, 3257 Grossaffoltern (CH); MULLER, Simon, 3604 Thun (CH)
(74) Representative: ICB SA

(57) **Abstract**

The battery comprises a stack formed of multiple stacked pairs of a first and a second electrode (2, 5) and further formed of separator sheets (8, 9) arranged between adjacent electrodes of the stack, each electrode comprising a coated metal foil portion (3, 6) and a non-coated metal tab (4, 7), wherein the first electrode tabs are superposed and interconnected in a first tab stack and the second electrode tabs are superposed and interconnected in a second tab stack. The battery is characterized in that in at least one of the tab stacks, at least two of the stacked tabs have mutually different in- plane dimensions. The anode tabs (4a-4c) and/or the cathode tabs of the battery may for example be stacked in stepwise fashion starting from a larger tab (4a) at the bottom of the stack to a smaller tab (4c) at the top.

## Description

### Field of the Invention

The present invention is related to batteries, in particular to batteries comprising a plurality of stacked electrodes.

### State of the art.

In many commercially produced batteries, the electrodes are obtained from metal foils provided with an active coating. A battery cell of this type may be produced by a variety of production techniques, including winding, folding and stacking. According to one stacking technique, multiple planar so-called monocells are stacked together, each monocell comprising a first electrode, usually a cathode, inserted between two separator sheets. The separator sheets are joined together along the perimeter of the cathode by heat or adhesive to form a pocket having the same shape and dimensions as the anode. The anode is attached to the pocket to thereby form the monocell. Multiple stacked monocells are then placed into a metal container and tabs extending from the electrodes are attached to each other for example by welding, for connection to the contacts of the battery. The container is filled with a liquid electrolyte before final sealing. Alternatively, the stacked monocells can be integrated in an aluminium laminate pouch.

Another technique wherein electrodes are stacked is known as the Z-folding method: cathodes and anodes are alternately stacked and a continuous separator sheet is interwoven in serpentine-fashion with the stacked electrodes.

As stated, the tabs of the stacked electrodes are attached to each other, i.e. the anode tabs are attached together and the cathode tabs are attached together, and the respectively assembled tab stacks are then connected to the battery contacts. In presently known assembly methods, all anode tabs have the same shape and dimensions and all cathode tabs have the same shape and dimensions, so that each tab stack is formed of superposed tabs of the same shape and size. Attaching the tabs to each other in each stack is usually done by resistance welding or ultrasonic welding.

However, as the number of tabs in the stack increases, the alignment of all tabs in the stack becomes more difficult to control and non-aligned tabs of the anode stack can end up close to the cathode stack or vice versa, resulting in a higher risk of short-circuiting. Also, welding of the tab stacks becomes more difficult as the number of tabs in the stack increases. Furthermore, thicker tab stacks take up more space inside the battery, resulting in lower capacity of the battery.

### Summary of the invention

The invention is related to a battery in accordance with the appended claims. The battery comprises a stack formed of multiple stacked pairs of a first and a second electrode and further formed of separator sheets arranged between adjacent electrodes of the stack, each electrode comprising a coated metal foil portion and a non-coated metal tab, wherein the first electrode tabs are superposed and interconnected in a first tab stack and the second electrode tabs are superposed and interconnected in a second tab stack. The battery is characterized in that in at least one of the tab stacks, at least two of the stacked tabs have mutually different in-plane dimensions. The anode tabs and/or the cathode tabs of the battery may for example be stacked in stepwise fashion starting from a larger tab at the bottom of the stack to a smaller tab at the top.

The invention enables reducing the energy applied for interconnecting the stacked tabs by welding. It also allows to reduce the amount of material used for the tabs and to mitigate problems related to the alignment of the tabs.

### Brief description of the figures

Figure 1 illustrates a monocell suitable for producing a battery by the stacking technique.
Figures 2a to 2d illustrate the four components of the monocell shown in Figure 1.
Figures 3a to 3c illustrate the stacked anode tabs of an assembly comprising monocells in accordance with the prior art.
Figures 4a to 4c illustrate the stacked tabs in a monocell-based assembly in accordance with an embodiment of the invention.
Figure 5 illustrates a preferred manner for interconnecting stacked tabs in the embodiment of Figure 4.
Figures 6a to 6c illustrate another embodiment of stacked tabs in accordance with the invention.
Figure 7 illustrates a further embodiment.

### Detailed description of embodiments of the invention

A number of embodiments are described hereafter, with reference to the drawings. Most of the described embodiments are related to batteries of the stacked monocell type. The invention is however applicable also to batteries obtained by other methods wherein electrodes are stacked together, such as the Z-folding technique.

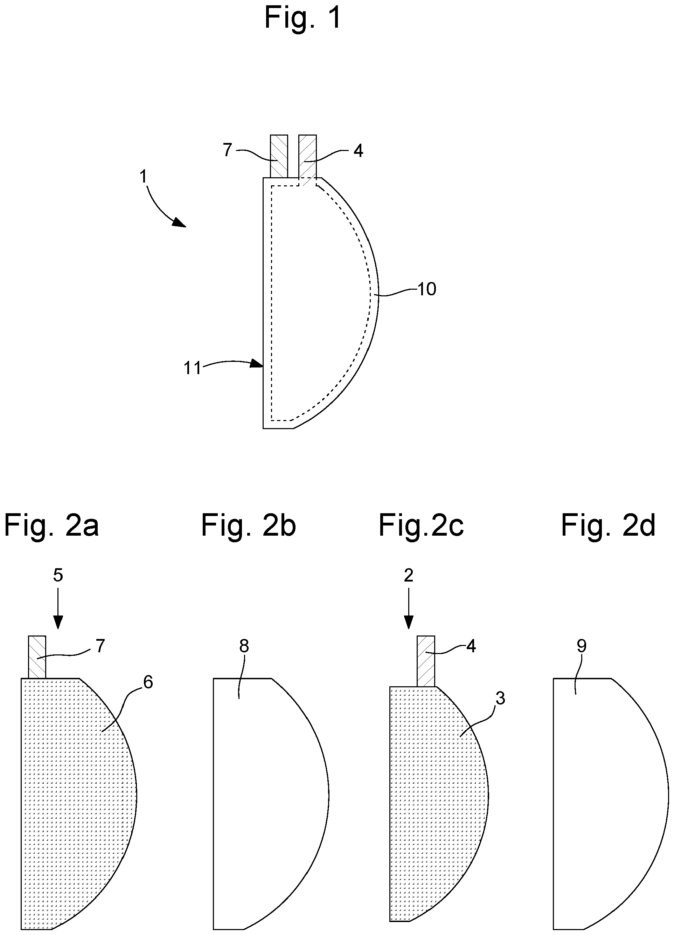

Figure 1 illustrates a monocell 1 suitable for producing a battery using the above-described stacking method. The monocell comprises a number of superposed parts shown separately in Figures 2a to 2d. At the bottom of the monocell is one of the electrodes. In this exemplary case, it is the anode 5, shown in Figure 2a but it could also be the cathode. The anode is formed of a coated metal foil comprising a coated electrode portion 6 and a non-coated tab 7. The anode coating may be a graphite coating in the case of a rechargeable lithium-ion battery. The tab 7 is integral with the anode foil, i.e. the tab is a non-coated portion of the foil extending out from the coated portion 6. Alternatively, the tab 7 may be a separate piece of metal foil attached to the coated portion 6 by welding. The anode is cut in the form of a 'D' which is merely one exemplary monocell shape. Other shapes are possible. The anode coating may be applied on one side of the foil or on both sides. In many commonly applied battery cell stacks, a single-side coated anode is provided at the bottom of the stack and at the top of the stack, with the uncoated side oriented towards the bottom and the top of the stack respectively, whereas all anodes between the bottom and top anode are double-side coated.

On top of the anode 5 is a pocket 11 comprising a first and second separator sheet with the cathode inserted between said sheets. The cathode 2 is shown in Figure 2c and is also formed of a metal foil having a coated portion 3 and a non-coated tab 4 integral with the coated portion or attached thereto by welding. The cathode coating may comprise lithium cobalt oxide or another lithium based active component in the case of a rechargeable lithium-ion battery. The cathode coating is preferably applied on both sides of the cathode foil. The separator sheets 8 and 9, shown separately in Figures 2b and 2d are attached to each other along the perimeter of the coated cathode portion 3, in an attachment lane 10 indicated with the help of dotted lines in Figure 1. The cathode tab 4 lies adjacent and close to the anode tab 7 in the assembled monocell. This is usually the case, but the tabs could also be placed further apart. The outer perimeter of the coated portion 6 of anode 5 corresponds to the outer perimeter of the cathode-containing pocket 11. The anode 5 may be attached to the cathode-containing pocket 11 by an adhesive or the layers of the monocell 1 may be assembled by a lamination process for example. The monocell 1 may comprise a double-side coated cathode in the pocket 11, attached to a double-side coated anode or to a single-side coated anode. A stack of monocells may for example begin at the bottom of the stack with a first monocell having a single-side coated anode, with thereon one or more monocells having double-side coated cathodes attached to double-side coated anodes, and a single-side anode on top of the stack, i.e. the top anode is not part of a monocell. An example of such a stack is given later.

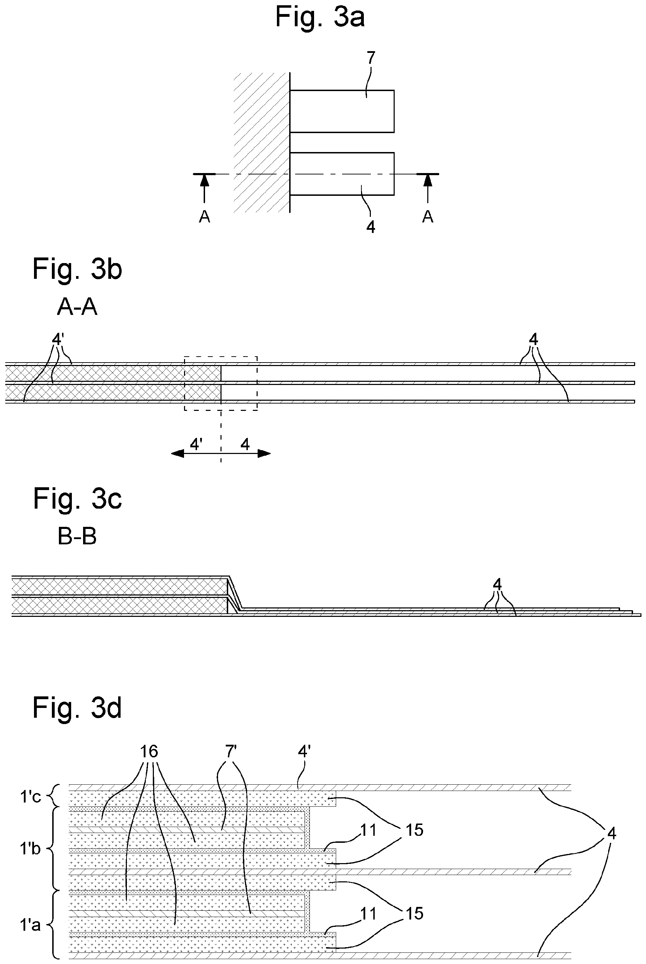

In an assembled battery according to the prior art, multiple monocells (and possible an additional top anode) are stacked together, so that all the anode tabs 4 are aligned and all the cathode tabs 7 are aligned and superposed. The anode tabs 4 are interconnected and coupled to a first contact of the battery, and the same is done with the cathode tabs 7, i.e. the cathode tabs are interconnected and coupled the second battery contact. Figures 3a shows a plane view of the superposed and aligned anode and cathode tabs 4 and 7 in a prior art battery comprising three anodes and two cathodes. Figure 3b shows a section view through the aligned anode tabs 4.

In Figure 3b, the anode tabs 4 are aligned but not yet interconnected by a welding process. The tabs are shown to be parallel to each other in Figure 3b, which is merely a schematic representation indicating that the tabs are not yet interconnected at this stage (in reality the tabs are flexible and will not extend straight from the electrodes in the manner shown when the assembly is placed on a horizontal surface). In Figure 3c, the tabs are pressed together, at which stage the tabs are ready to be interconnected, which is usually done by welding, for example ultrasonic welding.

The section views in Figure 3b and 3c are simplified and do not shown the details of the stack layers. Figure 3c is an enlarged view of the rectangle indicated in Figure 3b, and shows the layer details in this particular stack. It is seen that the tabs 4 are non-coated extensions of the anode foil 4'. The anode coatings are indicated by numeral 15. The bottom and top anode are single-side coated, while the central anode is double-side coated. The cathode foil 7' and double-sided coating 16 of the cathodes is equally indicated, as well as the separator pockets 11 into which the cathodes are inserted. The cathode tabs 7 are outside the plane of the section view. This stack thus includes a first monocell 1'a having a single-side coated anode and a double-side coated cathode, a second monocell 1'b having a double-side coated cathode and a double-side coated anode, and final single-side coated anode 1'c at the top of the stack.

It is seen that the superposed anode tabs 4 have the same rectangular shape and size, i.e. the tabs have the same in-plane dimensions (dimensions of the tab when it is placed on a planar surface, as measured in a plane parallel to said planar surface). The same is true for the superposed cathode tabs 7. As stated in the introduction, when the number of stacked monocells in a battery increases, this is likely to cause a number of technical problems. One of these problems is related to interconnecting the superposed tabs. When the tabs all have the same dimensions, it is necessary to interconnect all the tabs of the stack at least at one location, for example by applying a welding process that forms a weld going from the top to the bottom of the stacked tabs When the number of tabs in the stack increases, the energy demands for realizing such a process also increase.

According to the invention, the superposed tabs of the stacked monocell assembly do not have the same in-plane dimensions. The difference in the dimensions is such that it enables significant advantages in terms of solving the above-identified problems. A number of exemplary embodiments will now be described.

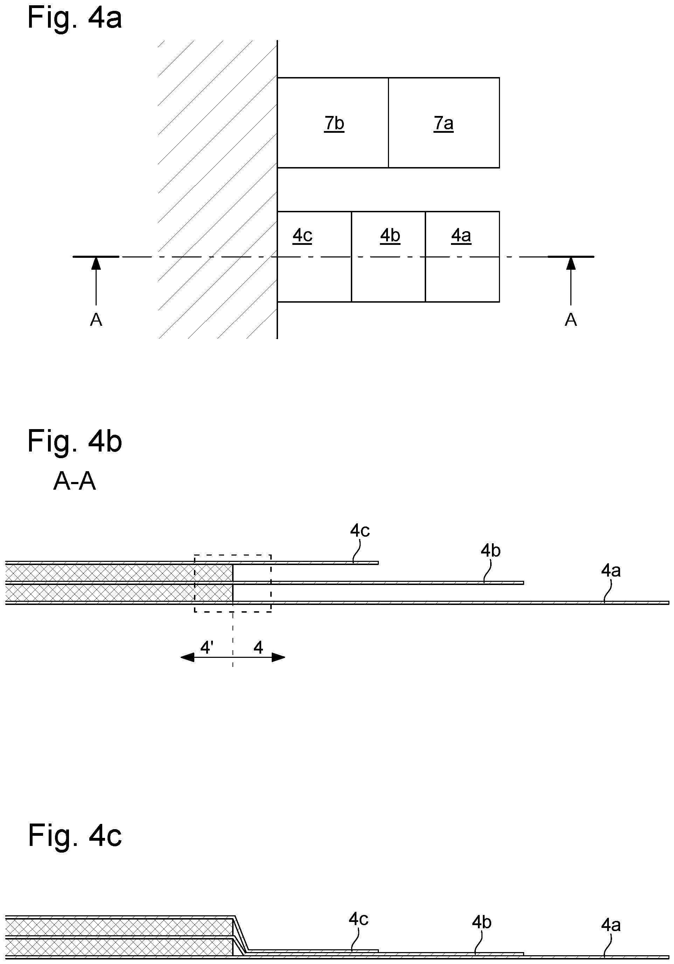

Figures 4a to 4c illustrate a stack for a battery in accordance with an embodiment of the invention, applicable as an improvement of the prior art design shown in Figures 3a to 3c. The stacks of superposed anode and cathode tabs 4a-4c and 7a-7b may again be placed adjacent to each other, at the same distance as in the prior art design. The electrodes could have a D-shape as in the prior art design, or any other applicable shape.

It is seen in the section view in Figure 4b that the anode tabs 4a-4c are rectangular in shape, having the same width, but that the bottom tab 4a is longer than the middle tab 4b, which is in turn longer than the upper tab 4c of the stack. It is seen that the cathode tabs 7a and 7b are also different in size, with the bottom tab 7a being larger than the second tab 7b.

When pressed together therefore as illustrated in Figure 4c, the anode tabs are mutually overlapping in stepwise fashion, with the bottom tab 4a extending furthest outward from the stacked electrodes. Interconnecting the tabs can be done by welding or an equivalent interconnection method. However, advantageously, the welding process does not need to physically attach all the tabs to each other in one particular area.

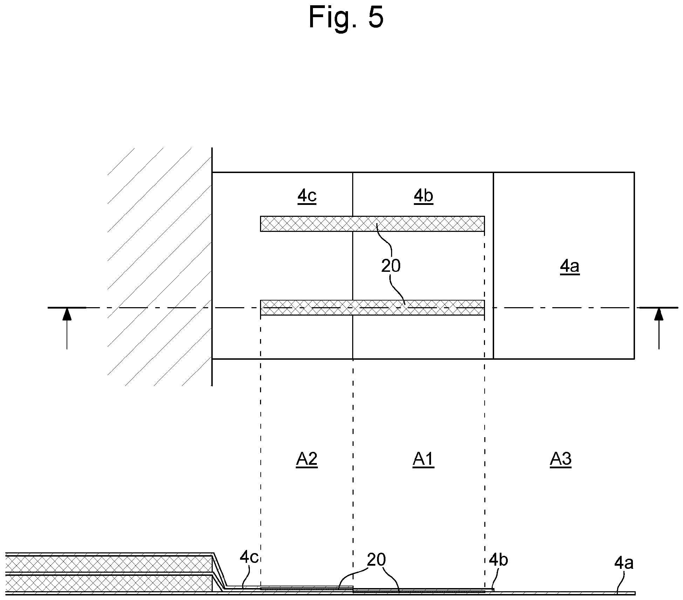

As illustrated in Figure 5, laser welds 20 can for example be formed along two parallel lines. The welds interconnect the bottom tab 4a to the middle tab 4b in the area A1 adjacent the upper tab 4c and they interconnect the middle tab 4b to the upper tab 4c in the area A2 where all three tabs overlap. In this way, all three tabs are interconnected and the distal end (area A3) of the bottom tab 4a can be connected to the battery contact. In the area A2 where all three tabs overlap, i.e. the area corresponding to the upper tab 4c, it is not required to form a weld that interconnects all three tabs. The energy required for the welding process is therefore lower than in the case where the tabs have the same in-plane dimensions.

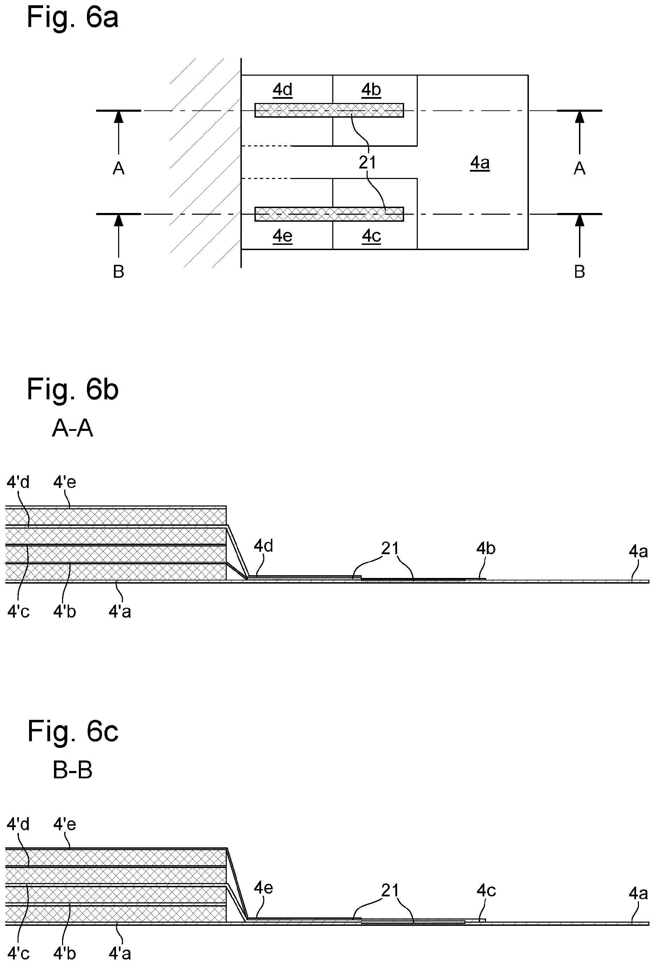

A second embodiment is described in Figures 6a to 6c, illustrating that more intricate tab configurations than the one shown in Figures 4 and 5 fall within the scope of the invention. Only the anode tabs are shown, but a similar configuration may be applied to the cathode tabs. The assembly now includes 5 anodes and 4 cathodes. The anodes of the stack are indicated in the cross-sections and numbered 4'a to 4'e, and the anode tabs are numbered 4a-4e.

It is seen that the tabs 4a-4e are all rectangular. The bottom tab 4a is the largest. Two parallel tabs 4b and 4c which are shorter and narrower than the bottom tab 4a extend respectively from the second and third anode 4'b and 4'c of the stack, and lie side by side on the bottom tab 4a. Two further parallel tabs 4d and 4e extend respectively from the fourth and fifth anode 4'd and 4'e of the stack and are arranged respectively on the tabs 4b and 4c, having the same width but shorter length compared to the tabs 4b and 4c.

A possible pattern of laser welds 21 is equally indicated. It is again clear that weld connections are required only between tabs which are directly in contact with each other, and that no weld connection is needed that passes through the full stack of 6 superposed tabs.

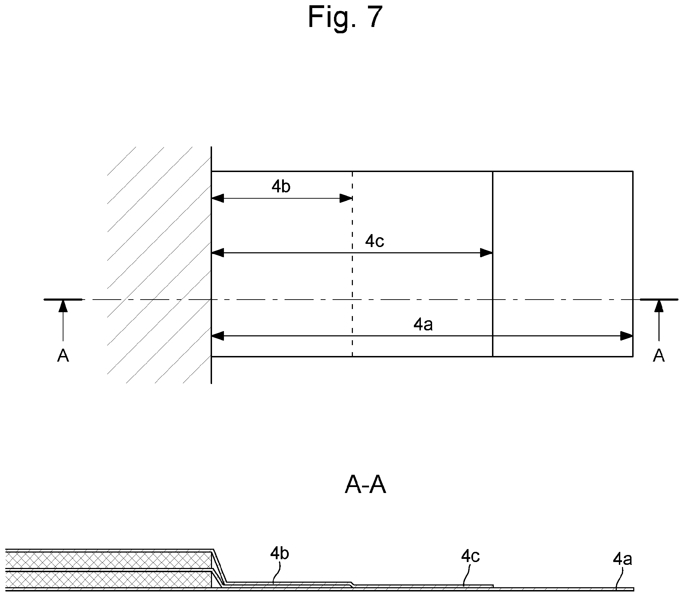

Many other configurations and tab shapes can be devised which are all based on the above-illustrated general concept, namely to provide tabs which have different in-plane dimensions. Preferably, as illustrated by the two embodiments described above, the tab dimensions become smaller in stepwise fashion from the bottom of the stack to the top. It is however also possible to have configurations wherein a larger tab fully covers a smaller tab, as illustrated by the embodiment shown in Figure 7. Also, it is not required that all the tabs in the stack have different dimensions. The stack could comprise a pair of equal-sized superposed tabs for example, but wherein the equal-sized dimensions of the pair are different from the dimensions of the other tabs in the stack.

Apart from the advantage of reducing the required welding energy, the invention brings other benefits. As stated, using smaller tab dimensions in the tab stacks compared to the prior art represents a material cost saving. Also, alignment errors between superposed tabs are less likely to occur and/or less likely to lead to the risk of shorting between the stacked anode and cathode tabs.

The invention is applicable to rechargeable as well as non-rechargeable planar batteries of any realistically realizable shape and dimensions. A planar battery according to the invention is obtainable by stacking monocells, interconnecting the superposed tabs of the first and second electrodes of the monocells, and connecting the respective interconnected tabs to respective battery contacts. This stacked and interconnected monocell assembly may be further handled to form a battery according to known methods, for example by inserting the assembly in a battery container with the tabs connected respectively to a cup and lid of the container, or by integrating the assembly in a laminate pouch.

The invention is however not limited to batteries comprising stacked monocell, but to any battery comprising an electrode assembly comprising stacked electrodes separated by separator sheets. This includes for example an electrode assembly obtained by the Z-folding technique.

## Claims

1. A battery comprising a stack formed of multiple stacked pairs of a first and a second electrode (2, 5) and further formed of separator sheets (8, 9) arranged between adjacent electrodes of the stack, each electrode comprising a coated metal foil portion (3, 6) and a non-coated metal tab (4, 7), wherein the first electrode tabs are superposed and interconnected in a first tab stack and the second electrode tabs are superposed and interconnected in a second tab stack, **characterized in that** in at least one of the tab stacks, at least two of the stacked tabs have mutually different in-plane dimensions.

2. A battery according to claim 1, wherein the bottom tab (4a) of the stack has the largest in-plane dimensions of the stack.

3. A battery according to claim 2, wherein each consecutive tab, starting from the tab lying directly on said bottom tab (4a) and going upward in the stack, has smaller in-plane dimensions than the previous tab in the stack.

4. A battery according to any one of the preceding claims, wherein the tabs in said at least one stack are shaped as rectangles (4a-4c) having stepwise decreasing lengths, as measured in a direction extending away from the respective electrodes.

5. A battery according to claim 4, wherein said rectangular tabs of stepwise decreasing lengths have equal widths.

6. A method for assembling an electrode stack for a battery according to claim 3, the method comprising the steps of:
- stacking the electrode pairs on a horizontal surface, wherein the first and second electrode tabs are superposed and aligned in a first and second stack, and wherein in said at least one tab stack, each consecutive tab, starting from the tab lying directly on the bottom tab (4a) and going upward in the stack, is smaller than the previous tab in the stack,
- in areas where two consecutive tabs of the stack overlap, producing an electrical connection (20, 21) between said two consecutive tabs, to thereby interconnect all the tabs of the stack.

7. A method according to claim 6, wherein said consecutive tabs are interconnected by a welding process.
